# EUROPEAN PATENT APPLICATION

(11) **EP 3 396 584 A2**
(43) Date of publication of application: **31.10.2018**
(21) Application number: 18161783.8
(22) Date of filing: 14.03.2018
(51) Int. Cl.: G06K 7/14

(54) **OPTICAL COMPENSATION FOR IMAGE SCANNER**

(30) Priority: 29.03.2017 US 201715472314
(71) Applicant: NCR Corporation, Atlanta, GA 30308-1007 (US)
(72) Inventor: CROOKS, John, Duluth, GA 30097 (US); COSTELLO, Christopher John, Suwanee, GA 30024 (US)
(74) Representative: Secerna LLP

(57) **Abstract**

Disclosed herein are systems and methods for configuring a service terminal (100). The systems and methods may include reading a code (110) located on a component (104) of the service terminal (100) using a scanner (102) and updating a process executable by the service terminal (100) using data associated with the component (104). The scanner (102) may be in electrical communication with the service terminal (100). The code (110) may include data associated with the component (104).

## Description

Service terminals have become ubiquitous within the retail and banking environments. At the retail level, service terminals reduce labor requirements and increase check-out efficiency by allowing one cashier to oversee many check-out lanes. Within the financial services sector, service terminals, or automated teller machines, allow banking and other financial customers to make withdrawals and deposits or perform other financial transactions without having to find time to visit a financial institution during banker's hours or even visit a financial institution.

Disclosed herein are systems and methods for configuring a service terminal. The systems and methods may include reading a code located on a component of the service terminal using a scanner and updating a process executable by the service terminal using data associated with the component. The scanner may be in electrical communication with the service terminal. The code may include data associated with the component.

According to a first aspect of the present invention, there is provided a method of configuring a service terminal, the method including reading an optical symbol located on a component of the service terminal using a scanner, the scanner in electrical communication with the service terminal, the optical symbol including data associated with the component; and updating a process executable by the service terminal using the data associated with the component.

Optionally, the data may include optical data for a window associated with the scanner.

Optionally, the scanner may be integrated with the service terminal.

Optionally, the scanner may be a handheld scanner in electrical communication with the service terminal.

Optionally, the optical symbol may be a bar code, a quick response code, or a distinct image.

Optionally, the data associated with the component may be encoded within the optical symbol.

Optionally, the data associated with the component may be a pointer to a location within a database storing configuration data for the component.

According to a second aspect of the present invention, there is provided a service terminal including a processor; and a memory storing instructions that, when executed by the processor, cause the processor to: receive, from a scanner, an image of an optical symbol, the optical symbol including data associated with a component of the service terminal; and update a process executable by the processor using the data associated with the component.

Optionally, updating the process executable by the processor may further include causing the processor to apply a color correction to a second image received by from the scanner.

Optionally, the component may include a scanning window and the data may include optical data for the scanning window.

Optionally, the scanner may be integrated with the service terminal.

Optionally, the scanner may be a handheld scanner in electrical communication with the service terminal.

Optionally, the optical symbol may be a bar code, a quick response code, or a distinct image.

Optionally, the data associated with the component may be encoded within the optical symbol.

Optionally, the data associated with the component may be a pointer to a location within a database storing configuration data for the component.

Optionally, receiving the image of the optical symbol and updating the process occur during a startup procedure of the service terminal.

According to a third aspect of the present invention, there is provided a service terminal including a top plate including a scanning window and an optical symbol attached to an underside of the top plate; and a scanner located proximate the top plate and operable to: capture a first image, the first image including the optical symbol when top plate may be installed on the service terminal, and apply a color correction to a second image, the second image being of a product code associated with an item being purchased by a user.

Optionally, the optical symbol may include optical data for the scanning window encoded therein.

Optionally, the optical symbol may be a bar code, a quick response code, or a distinct image.

Optionally, the optical symbol may be not visible to the scanner when the service terminal may be in operation.

These and other aspects of the present invention will be apparent from the following specific description, given by way of example, with reference to the accompanying drawings.

The above-mentioned and other features and advantages of this invention, and the manner of attaining them, will become more apparent and the invention itself will be better understood by reference to the following description of embodiments of the invention taken in conjunction with the accompanying drawings, wherein:
FIG. 1 shows an example schematic of a barcode scanner consistent with the disclosure;
FIG. 2 shows an example computing device consistent with the disclosure; and
FIG. 3 shows a method consistent with the disclosure.

Corresponding reference characters indicate corresponding parts throughout the several views. The exemplifications set out herein illustrate exemplary embodiments of the invention, and such exemplifications are not to be construed as limiting the scope of the invention any manner.

The following detailed description refers to the accompanying drawings. Wherever possible, the same reference numbers are used in the drawings and the following description to refer to the same or similar elements. While embodiments and examples are described, modifications, adaptations, and other implementations are possible. For example, substitutions, additions, or modifications may be made to the elements and stages illustrated in the drawings, and the systems and methods described herein may be modified by substituting, reordering, or adding stages to the disclosed methods or elements to the disclosed systems. Accordingly, the following detailed description does not limit the disclosure. Instead, the proper scope of any invention disclosed herein is defined by the appended claims.

Scanner performance may be sensitive to optical component properties. As disclosed herein, a system may identify the optical properties of components during manufacture or installation and adjust scanner behaviors to compensate based on the optical properties of the components. For example, the components may include an optical symbol, such as a barcode, quick response (QR) code, geometric shape. Examples of geometric shapes include, but are not limited to a triangle, square, or a series of dots etched, stamped, or molded into the top plate. The scanner 102 may recognize the optical symbol 110, and adjust a scanning algorithm or other process executed by the service terminal 100.

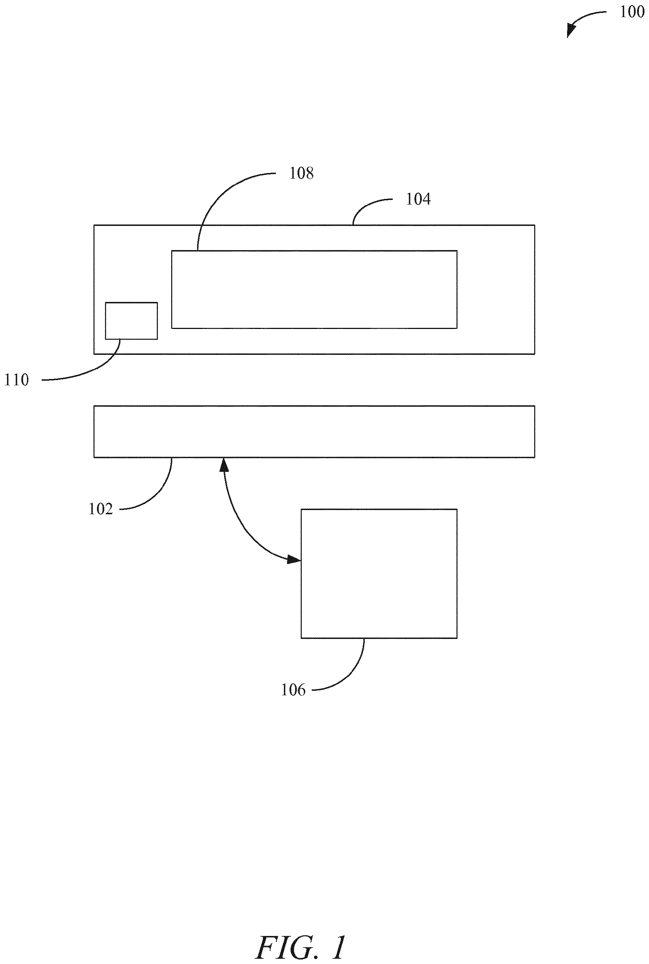

Turning now to the figures, FIG. 1 shows a schematic of a service terminal 100. The service terminal 100 may include a scanner 102, a top plate 104, and a computing device 106. The top plate 106 may include a window 108 and an optical symbol 110. During manufacturing of or maintenance to the service terminal 100, the top plate 104 or other components (not shown) may be installed or replaced. The components may be optical component or non-optical components. Non-limiting of optical components include mirrors, lenses, and window glass (such as window 108). Non-limiting examples of non-optical components include scales, memory modules, printers, etc. Multiple components may also be considered together as a single optical assembly, non-optical assembly, or combination thereof.

The scanner 102 may use white light with color sensors. As a result, the scanner may be sensitive to variations in component optical properties. For example, the color as seen by the scanner 104 may be "white balanced" to optimize 1D scan performance while simultaneously providing red-filtered images to read codes. Therefore, any unexpected shift in optical system color properties may change the white balance, and reduces scan performance.

As disclosed herein, algorithms executed by the computing device may automatically compensate for color variations, but may also be sensitive to transmissivity. In addition, to transmissivity, other examples of optical properties may include, but are not limited to color shift, optical transmissivity, anti-reflection capability, and clarity (resolution or haze). The optical properties may be a property of the window 108. For example, the window 108 may include a sapphire layer that may give the window 108 a blue tint. As a result, the window 108 may act as a filter. By knowing the optical properties of the window 108, the computing device 106 may compensate for any filtering, loses, or other distortions that may be caused by the window 108.

For example, flatbed scanners may require highly durable top plate glass window materials, and these glass materials may vary greatly in their color metric properties. For instance, sapphire and a tempered glass may have different properties. Some glasses may have a relatively neutral color profile while sapphire may have a distinct blue shift. Scanners, such as scanner 102 may be a common component across a variety of barcode scanners that may include different glasses. Thus, as disclosed herein, the scanner may be used to scan the optical symbol 110 and obtain information about the properties of the window 108. The properties may be directly encoded within the optical symbol 110 or the optical symbol 110 may be a pointer that allows the computing device 106 to retrieve the optical properties from a database.

The scanner 102 may also be a separate component that interfaces with the computing device 106. For example, the scanner 102 may be handheld scanner that may attach to the service terminal 100 or computing device 106 via a USB port or other communication port.

The optical symbol 110 may or may not be visible to the scanner 102. For example, the optical symbol 110 may be located in a position on the top plate 104 that is visible to the scanner 102. During startup of the service terminal 100, the scanner 102 may scan the optical symbol 110 and allow the computing device 106 to configure the service terminal 100 using the optical properties of the window 108.

The optical symbol 110 may not be visible to the scanner 102 and may be scanned during installation of the top plate. For example, a maintenance technician may scan the optical symbol 110. The computing device 106 may extract optical information from the optical symbol 110 or retrieve the optical information from a database as disclosed herein. For instance, if the optical symbol 110 is a geometric shape or series of dots, it can be placed where it is visible to the scanner 102 during normal operation. The series of dots could be etched in the top surface of the top plate 104 such that they are always visible. Thus, during startup, the scanner 102 may scan the optical symbol 110 as described above.

As disclosed herein, the optical data for the window 108 may be encoded as follows:
1) a unique prefix may identify the optical symbol 110 as an optical component (e.g., 12 byte ASCII model number).
2) format code (1-byte number that defines the order and format of the data that follows).
3) part number and revision (12 byte ASCII field).
4) manufacturing date (8 byte ASCII field).
5) serial number (12 byte ASCII field).
6) glass material (1-byte number identifies glass material for example, Sapphire, etc.).
7) transmissivity (2-byte quantity, in percent).
8) red color shift (1-byte scalar quantity required to compensate for any red color shift).
9) green color shift (see red color shift above).
10) blue color shift (see red color shift above).
11) tare weight (8-byte number in grams).

As disclosed herein, the scanner 102 may optimize scale error messages as follows. It is common for cashiers to accidentally press the scanner scale-zero button with the top plate 104 removed, which triggers a scanner voice message with instructions to correct like "Replace the top plate." Unfortunately, because the scanner does not know the exact top plate tare weight, it is hard for the service terminal 100 to differentiate a missing top plate from other problems. One example of an "other problem" is an item left on the top plate 104 during startup of the service terminal 100 and then subsequently removed, which calls for a different voice message "Reset the scanner or reboot the POS." By knowing the exact top plate tare weight from the top plate 104 optical symbol 110, the service terminal 100 can accurately identify the missing top plate and deliver the best corrective action message.

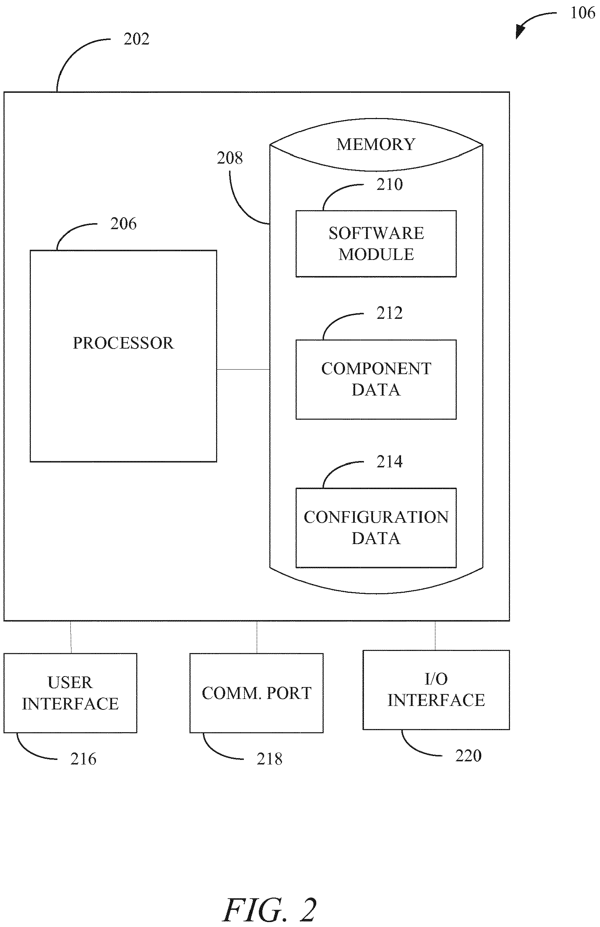

FIG. 2 shows an example schematic of computing device 106 consistent with embodiments disclosed herein. The computing device 106 may be an integral component of the service terminal 100 or a remote component. For example, as an integral component, the computing device may be located in close proximity to the service terminal 100, such as in a cabinet housing the scanner 102 or other components of the service terminal 100. As a remote component, the computing device 106 may be located in a different section of a store (e.g., a server room) or offsite and communicate with the scanner 102 and other components of the service terminal 100 via a network connection (e.g., a LAN or WAN connection).

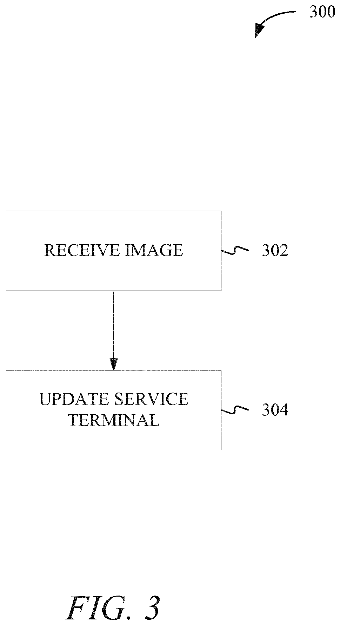

The computing device 106 may include a computing environment 202, which may include a processor 206 and a memory unit 208. The memory unit 208 may include a software module 210, component data 212, and configuration data 214. The component data 212 may include the optical properties of the window 108 and other components of the service terminal 100. The component data 212 may be stored in a database stored within the memory 208. The configuration data 214 may include software or other algorithms as disclosed herein for configuring the service terminal 100 using the component data 212. For instance, executing on the processor 206, the software module 210, component data 112, and configuration data 214 may perform processes for maintaining, updating, and configuring a service terminal, including, for example, one or more stages included in method 300 described below with respect to FIG. 3.

The computing device 106 may also include a user interface 216. The user interface 216 may include any number of devices that allow a user to interface with the computing device 106 or service terminal 100. Non-limiting examples of the user interface 216 may include a keypad, a microphone, a speaker, a display (touchscreen or otherwise), etc.

The computing device 106 may also include a communications port 218. The communications port 218 may allow the computing device 106 or service terminal 100 to communicate with information systems such as a remote server that may include the optical properties of the window 108. Non-limiting examples of the communications port 218 may include, Ethernet cards (wireless or wired), Bluetooth® transmitters and receivers, near-field communications modules, cellular modules, USB port, etc.

The computing device 106 may also include an input/output (I/O) device 220. The I/O device 220 may allow the computing device 106 to receive and output information. Non-limiting examples of the I/O device 220 may include, a camera (still or video), a printer, a scanner, etc.

FIG. 3 shows a method 300 for configuring a service terminal. The method 300 may begin at stage 302 where an image of the optical symbol 110 may be received by the computing device 106 from the scanner 102. As disclosed herein, the image may be received during manufacturing of the service terminal 100, during maintenance, etc. The image may be encoded with component data, such as optical properties, of the top plate, 104, the window 108, etc.

From stage 302, the method 300 may proceed to stage 304 where a process executed by the service terminal 100 or computing device 106 may be updated. For example, and as disclosed herein, using the image of the optical symbol 110, the computing device 106 may receive optical properties for the window 108 (either directly from the optical symbol 110 or by retrieving it from a database). Using the optical properties, the computing device 106 may update one or more processes or algorithms executed by the computing device 106. For instance, the optical properties may indicate a loss associated with an image due to the window 108 having a low transmissivity or a color shift due to a tint of the window 108. Thus, the computing device 106 can add a correction factor or color correction to a second image scanned by the scanner 102 accordingly.

Updating a process executed by the computing device 106 or service terminal 100 may include updating software. For example, upon scanning the optical symbol 110, lines of code or variables used by the code may be replaced and updated. For example, the software may utilize the transmissivity of the window 108 and after the scanning of the optical symbol 110, the transmissivity of the window 108 may be saved in the memory 208.

As disclosed herein, the method 300 can occur at startup of the service terminal 100, during manufacturing of the service terminal 100, or when maintenance is performed on the service terminal 100. In addition, when the optical symbol 110 is scanned, the computing device 106 may also retrieve software updates. For example, after scanning the optical symbol 110, the computing device 106 may access a remote service and download a software update. The software update may be part of regular updates and the optical symbol 110 may be a pointer to a location where the updates may be found. In addition, the component data identified by the optical symbol 110 may require additional drivers or other software to make a component function. For example, the optical symbol 110 may be applied to a scale and during installation of the scale, the scanner 102 may scan the optical symbol 110 and download drivers for the scale.

The systems and methods disclosed herein address a technical problem and apply a technical solution to the technical problem. The technical problem may be the distortion or other errors introduced during a scanning process by the window 108. The systems and methods herein allow for any type of material to be used as the window 108 and protect the scanner 102 from damage while still allowing the scanner 102 to operate at maximum performance. As a result, the systems and methods disclosed herein result in an increased performance and efficiency of the service terminal 100 by allowing components to be changed or otherwise altered during the manufacturing of or while performing maintance to the service terminal 100 without degrading performance.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method (300) of configuring a service terminal, the method comprising:
reading an optical symbol located on a component of the service terminal using a scanner, the scanner in electrical communication with the service terminal, the optical symbol including data associated with the component (302); and
updating a process executable by the service terminal using the data associated with the component (304).

2. The method of claim 1, wherein the data includes optical data for a window associated with the scanner.

3. The method of claim 1, wherein the scanner is integrated with the service terminal.

4. The method of claim 1, wherein the scanner is a handheld scanner in electrical communication with the service terminal.

5. The method of claim 1, wherein the optical symbol is a bar code, a quick response code, or a distinct image.

6. The method of claim 1, wherein the data associated with the component is encoded within the optical symbol.

7. The method of claim 1, wherein the data associated with the component is a pointer to a location within a database storing configuration data for the component.

8. A service terminal (100) comprising:
a processor (206); and
a memory (208) storing instructions that, when executed by the processor (206), cause the processor to:
receive, from a scanner (102), an image of an optical symbol (110), the optical symbol including data associated with a component of the service terminal; and
update a process executable by the processor using the data associated with the component.

9. The system of claim 8, wherein updating the process executable by the processor includes further causing the processor to apply a color correction to a second image received by from the scanner.

10. The service terminal of claim 8, wherein the component includes a scanning window and the data includes optical data for the scanning window.

11. The service terminal of claim 8, wherein the scanner is integrated with the service terminal.

12. The service terminal of claim 8, wherein the scanner is a handheld scanner in electrical communication with the service terminal.

13. The service terminal of claim 8, wherein the optical symbol is a bar code, a quick response code, or a distinct image.

14. The service terminal of claim 8, wherein the data associated with the component is encoded within the optical symbol.

15. The service terminal of claim 8, wherein the data associated with the component is a pointer to a location within a database storing configuration data for the component.
